(19) Europäisches Patentamt
European Patent Office
Office européen des brevets

(11) Publication number: **0 426 200 A1**

# (12) EUROPEAN PATENT APPLICATION

(21) Application number: 90122025.1

(22) Date of filing: 04.03.86

This application was filed on 17 - 11 - 1990 as a divisional application to the application mentioned under INID code 60.

(30) Priority: 26.04.85 US 727415

(43) Date of publication of application: 08.05.91 Bulletin 91/19

(60) Publication number of the earlier application in accordance with Art.76 EPC: 0 221 089

(84) Designated Contracting States: BE FR IT

(51) Int. Cl.[5]: C07F 7/10, C07F 7/21, C08G 77/54, C08G 77/62

(71) Applicant: SRI INTERNATIONAL
333 Ravenswood Avenue
Menlo Park, California 94025(US)

(72) Inventor: Laine, Richard M.
3866 Corina Court
Palo Alto, California 94303(US)
Inventor: Blum, Yigal
840 Coleman Avenue, Apt. 15
Menlo Park, California 94025(US)

(74) Representative: Rinuy, Santarelli
14, avenue de la Grande Armée
F-75017 Paris(FR)

## (54) Method of forming compounds having Si-N groups and resulting products.

(57) One or more reactants containing an Si-H group and an N-H group (in the same molecule or in different molecules) are reacted in the presence of a suitable catalyst. New silazane products result including oligomers and polymers. Suitable catalysts include metal carbonyl complexes and heterogeneous metal catalysts such as platinum on carbon. Immediate products of reaction such as Si-N products resulting from Si-H + N-H reactions undergo further reaction, resulting in many cases in a mixture of oligomers or of oligomers and polymers. The initial reactants may be open chain or ring compounds containing or Si-H + N-H in an open chain or in a ring or as pendant groups.

EP 0 426 200 A1

# METHOD OF FORMING COMPOUNDS HAVING SI-N GROUPS AND RESULTING PRODUCTS

## CROSS REFERENCE TO RELATED APPLICATION

This application is a continuation-in-part of copending United States Application Serial No. 06/727,414, filed April 26, 1985, entitled "METHOD OF PRODUCING POLYSILAZANES."

## BACKGROUND OF THE INVENTION

### 1. Field of the Invention

The invention relates to the synthesis of compounds (by which it is intended to include monomers, oligomers and polymers) containing the structure Si-N in the molecule. The invention concerns primarily silazanes which are useful to produce ceramic products on pyrolysis but it also relates to compounds which are siloxazanes and/or other compounds containing the Si-N group.

### 2. Description of the Prior Art

Polysilazanes are useful among other things for the preparation of silicon nitride, $Si_3N_4$, by pyrolysis. Silicon nitride is a hard material and is useful in forming fibers for reinforcement of composite materials. See, for example, (a) Department of Defense Proceedings. Fourth Metal Matrix Composites Technical Conference, May 19-21, 1981, prepared for DOD Metal Matrix Composites Information Analysis center and (b) J. J. Brennan, "Program to study SiC Fiber-Reinforced Glass Matrix Composites, Annual Report to Dept. of Navy (Nov. 1980), Contract No. N00014-78-C-0503.

A number of researchers have developed methods of forming polysilazanes, among them Redl and Rochow, who, in Angew. Chemie. (1964) 76 , 650 discuss the preparation of polysilazanes by reaction (1)

(1) 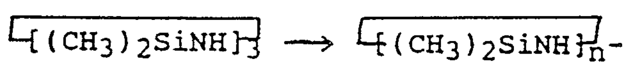

Brewer and Haber, J. Am. Chem. Soc. (1948) 70 , 3888 and Osthoff and Kantor, Inorg. Syn. (1957) 5 , 61 teach the reaction (2)

(2) $(CH_3)_2SiCl_2 + NH_3 \rightarrow [(CH_3)_2SiNH]_n + HCl$

More recent work is described by Markle and others in R. A. Markle, I. Sekercioglu, D. L. Hill, R. R. Wills, and R. G. Sinclair, "Preparation of $Si_xN_yC_z$ Fibers by the Controlled Pyrolysis of Novel Organosilicon Polymeric Precursors", Final Report to NASA, Marshall Flight Center, Alabama, (1981), Contract No. NAS8-33223.

Zoeckler and Laine in J. Org. Chem. (1983) 48 , 2539-2541 describe the catalytic activation of the Si-N bond and in particular the ring opening of octamethyl tetrasilazane,

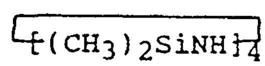

and polymerization of the ring-opened intermediate. Chain termination is effected by introducing $[(CH_3)_3Si]_2NH$ as a co-reactant giving rise to polymers $(CH_3)_3$ $Si-[NHSi(CH_3)_2]_n-NHSi(CH_3)_3$ where n may be 1 to 12 or more depending upon the ratio of the chain terminator to the cyclic silazane. The catalyst used was $Ru_3(CO)_{12}$. Other publications are as follows: W. Fink, Helv. Chem. Acta., 49 , 1408 (1966); Belgian Patent 665774 (1965); Netherlands Patent 6,507,996 (1965); D. Y. Zhinkis et. al., Rus. Chem. Rev., 49 , 2814 (1980) and references 51-58; K. A. Andrianov et. al., Dok Akad. Nauk. SSSR, 227 , 352 (1976); Dok Akad. Nauk. SSSR, 223 , 347 (1975); L. H. Sommer et. al., JACS 91 , 7061 (1969); L. H. Sommer, J. Org. Chem. (1967) 32 2470; L. H. Sommer et. al., JACS 89 , 5797 (1967).

The methods described in the literature cited above and elsewhere have resulted in one or more of the

following disadvantages: low yields of polysilazanes coincident with a high yield of cyclomers, lack of control over product selectivity or quality, etc. Often the product is volatile and is therefore difficult to pyrolyze if ceramic materials are desired from the solid or liquid polymer, or if it is solid, it is an intractable material which cannot be readily shaped, if indeed it can be shaped at all. The product is likely to be contaminated with halogen, especially chloride and it may be extensively cross linked and insoluble. In addition, the high ratio of Si to N in the polymers leads to formation of silicon along with $Si_3N_4$ on pyrolysis. In some instances excess carbon and SiC are also produced although they are not always desirable.

## SUMMARY OF THE INVENTION

It is an object of the invention to provide improved methods of preparing compounds containing the Si-N group.

It is another object to provide methods of preparing compounds containing the Si-N group which permit selective control of the product.

Another object is to provide methods whereby the product of preparing compounds containing the Si-N group can be controlled during synthesis.

Another object is to provide methods whereby the product of preparing compounds containing the Si-N group can be modified after preparation.

Another object is to provide novel compounds containing the Si-N group.

The above and other objects of the invention will be apparent from the ensuing description and the appended claims.

In accordance with the present invention a compound containing the silyl group Si-H is reacted with an -NH group to produce hydrogen and one or more compounds containing an Si-N group.

This type of reaction is carried out catalytically using a catalyst which is effective to activate the Si-H bond or the Si-Si bond.

Catalysts suitable for carrying out this reaction are metal complexes such as those in Table I which are homogeneous catalysts that dissolve in the reactants or in a solvent used to dissolve the reactants. Heterogeneous catalysts such as those in Table II may also be used. In general catalysts that activate the Si-H bond, or the Si-Si bond may be used.

The reactions are carried out in solution, the solvent being the reactants themselves or an added solvent. Suitable solvents are set forth in Table III. Temperature may range from -78° to 250°, preferably 25° to 150°. (All temperatures are Celsius.)

Table 1, Homogeneous catalysts

$H_4Ru_4(CO)_{12}$,$Ru_3(CO)_{12}$, $Fe_3(CO)_{12}$, $Rh_6(CO)_{16}$, $Co_2(CO)_8$$(Ph_3P)_2Rh(CO)H$, $H_2PtCl_6$, nickel cyclooctadiene, $Os_3(CO)_{12}$, $Ir_4(CO)_{12}$, $(Ph_3P)_2Ir(CO)H$, $Pd(OAc)_2$, $Cp_2TiCl_2$,$(Ph_3P)_3RhCl$, $H_2Os_3(CO)_{10}$, $Pd(Ph_3P)_4$, $Fe_3(CO)_{12}/Ru_3(CO)_{12}$ mixtures, also mixtures of metal hydrides.

Table 2, Heterogeneous catalysts

Pt/C, $Pt/BaSO_4$, Cr, Pd/C, Co/C, Pt black, Co black Pd black, $Ir/Al_2O_3$, $Pt/SiO_2$, $Rh/TiO_2$, $Rh/La_2O_3$, Pd/Ag alloy, $LaNi_5$, $PtO_2$.

Table 3, Solvents

Ethers such as $Et_2O$, $CH_3O\text{-}CH_2CH_2OCH_3$, THF, halocarbons such as $CHCl_3$, $CH_2Cl_2$, $HClCF_2$, $ClCH_2CH_2Cl$, aromatics such as PhH, $PhCH_3$,$Ph\text{-}OCH_3$.

Where the reaction is of dehydrocoupling between an Si-H group with an -NH group the -NH group may be in the form of ammonia, a primary amine $RNH_2$, a secondary amine RRNH (the R's being the same or different or forming part of a cyclic group), hydrazine, hydrazine derivatives. More generally,the source of

the -NH group may be described as

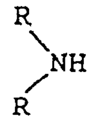

where the R's may be the same or different and may form part of a cyclic structure. R is commonly a hydrocarbon group, e.g. alkyl (e.g. methyl, ethyl, etc.), aryl (e.g. phenyl), cycloaliphatic (e.g. cyclohexyl) or aralkyl (e.g. benzyl) and the R's may be the same or different. R may also include an amino group, an alkoxy group, an ether group, an ester group, a silyl group, hydrogen, an alkenyl group, etc. The nitrogen of the -NH group may be present in various forms such as

>NH, -NH-NH-, 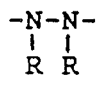, 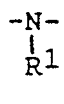, 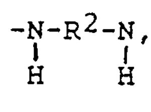, 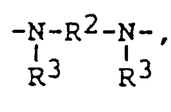, etc.

where $R^1$, $R^2$ and $R^3$ are defined as in R above, $R^2$ being, however, a bivalent group.

The following specific examples will serve to illustrate the practice and advantages of the invention.

Example 1 Reaction of Diethylsilane with Ammonia

To 3.9 mmol (5 ml) of diethylsilane ($Et_2SiH_2$) are added 25 $\mu$mol of $Ru_3(CO)_{12}$ and the solution is heated at 135°C under 60 psi of $NH_3$. The reaction is very fast producing oligomers, polymers and $H_2$. The $H_2$ pressure rises to 110 psi and is released every 0.5 hours. The reactor is again charged to 60 psi with $NH_3$. After 1 h all of the $Et_2SiH_2$ reacts and no further release of $H_2$ occurs.

Example 1A Reaction of Diethylsilane with Ammonia

To 20.0 mmol of diethylsilane (1.76 g) are added 25 $\mu$mol of $Ru_3(CO)_{12}$ (16 mg) and the solution is heated at 60°C under approximately 80 psi of $NH_3$. After 1 hour, 85% of the silane is converted to a mixture of oligomers and the pressure increases by 200 psi due to $H_2$ evolution. Although $Et_2SiH_2$ disappears totally after 2 hours, chain oligomerization and cyclization continue for 12 hours. Oligomers of types A (n = 3-5; major) B (n = 1-4; major) C ($n + n' = 2$ or 3), D ($n + n' + n'' + n''' = 2$) are found in the product mixture. Small quantities of other series - $H[Et_2SiNH]_nH$ (n = 2-4) and $H_2N[Et_2SiNH]_nH$ (n = 2) also appear in the solution

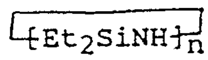

$H[Et_2SiNH]_nH$

A

B

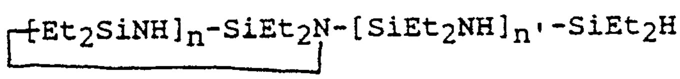

C

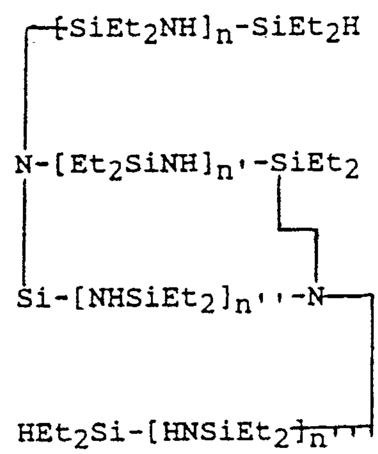

D

Example 2

To 30 mmol of tetramethyldisilazane (TMDS) are added 25 µmol of $Ru_3(CO)_{12}$ and the solution is heated at 135°C under 80 psi of $NH_3$. TMDS disappears totally after 20 h and polymerization continues for 28 h. The polymeric residue (heavy oil) is 2.44 gm (yield 61 wt%) after distillation at 180°/0.3 mm Hg with a Wt average MW of 764. The major polymeric series is the linear $HSiMe_2[NHSiMe_2]_xNHSiMe_2H$. Also smaller branched chain polymers appear. Molecular weights greater than 2000 can be obtained by varying the reaction conditions.

Example 3

To 20 mmol of TMDS are added 25 µmol of $Ru_3(CO)_{12}$ and the solution is heated at 135°C under 100 psi of $NH_3$. The conversion of TMDS is 94% after 1 h. 0.1 g of hydrazine are added and the solution is heated again for 3 hours.The GC shows that most of volatile products disappear. The high polymeric residue is 68 wt% after distillation at 180°/0.3 mm Hg. Similar results are achieved by using 200 mg of 5% Pt/C (activated under $H_2$) using identical conditions. The average molecular weight is 1200.

Example 4

To 75 mmol of TMDS are added 25 µmol of $Ru_3(CO)_{12}$ and the solution is heated at 135°C under 60 psi of ammonia. The hydrogen pressure produced in the reaction is released every 1 hour and the reactor is charged again with 60 psi of $NH_3$. TMDS disappears after 5 h. The initial turnover frequency (TF) for TMDS disappearance is 260. The net total turnover number for Si-N bond production is close to 4,480 after 8 hours.

Example 5

To 20 mmol of tetramethyldisilazane (TMDS) and 20 mmol anhydrous hydrazine ($NH_2NH_2$) are added 25 µmol of $Ru_3(CO)_{12}$ and the solution is heated at 135°C under nitrogen. All the TMDS disappears after 3 hours and $H_2$ pressure is obtained (TF = 528). The yield of the polymeric residue after distillation of the volatile products is 75 wt percent. The average molecular weight is 968.

Example 6 Reaction of n-Hexyl Silane with Ammonia

10.0 grams of n-hexyl silane

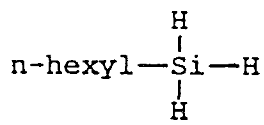

and 16 mg of $Ru_3(CO)_{12}$ as catalyst were heated at 60°C under 150 psi of ammonia in a stainless steel reactor. A pressure of 300 psi is produced during the first hour. The reactor is cooled to room temperature, the pressure is released and the reactor is charged again with 150 psi of ammonia. This procedure is repeated several times. After 1 hour, 68% of the substrate disappears (according to calculations based on NMR analysis) and the reaction slows down. After 17 hours, only 12% of the starting material remains in the oily solution. Only a slight additional conversion is detected when the temperature is raised to 90°C. The addition of another 16 mg of $Ru_3(CO)_{12}$ promotes further conversion to a viscous material concurrently with the disappearance of hexylsilane. The N.M.R. and the VPO analyses are shown in Table 4.

TABLE 4

| Time (hours) | Form of Products | Conversion[a] (%) | Unit's Ratio[b] | | |
|---|---|---|---|---|---|
| | | | Si-H | N-H | Mn |
| 1[c] | light oil | 68 | 1.28 | 0.72 | -- |
| 17[c] | slightly viscous | 88 | 1.18 | 2.18 | 921 |
| 24[d] | viscous oil | 91 | 1.06 | 2.20 | 962 |
| 28[d,e] | very viscous oil | 100 | 0.70 | 1.84 | 2772 |
| 36[d,e] | wax | 100 | 0.43 | 1.83 | 4053 |

[a]Overall conversion was determined by NMR spectra in $CDCl_3$ (ppm). For n-hexylsilane: Si-H 3.52 (t, 3); C-H 1.36 (m, 8) and 0.92 (m, 5). For polysilazanes: Si-H 4.78 (m), 4.57 (m) and 4.36 (m ; C-H 1.32 (m) and 0.91 (m); N-H 0.62 (m, br).
[b]Si-H and N-H unit ratios are determined by NMR using the hexyl group integration as an internal standard.
[c]At 60°C.
[d]At 90°C.
[e]After addition of 16 mg $Ru_3(CO)_{12}$.

The reaction mixture was analysed by NMR and GC-MS techniques to determine types of polymer. In Table 5 possible polymer types I, II, III, IV and V are set forth with elemental (C, H and N) analysis for each in the upper part of the table and actual analysis of the reaction mixture after 24 hours and 36 hours are set forth in the lower part of the table.

Certain conclusions may be drawn from Table 5, as follows:

a. The initial conversion is very fast; the initial turnover frequency for silane conversion is 2350 per hour.

b. The polymer at 24 hours contains large quantities of Si-H bonds even when the molecular weights are high. Crosslinking, is therefore prevented, possibly as a result of steric hindrance.

c. At 36 hours the high integration ratio of N-H to C-H strongly suggests that there are significant

quantities of the

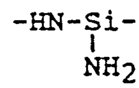 and 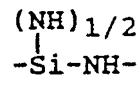

functional groups. $Si-NH_2$ can also be detected by I.R. (absorbance in 1550 $cm^{-1}$ in $CCl_4$). [ $(NH)_{1/2}$ signifies that the NH group is shared with another fragment of the polymer. ]

The GC-MS of the reaction solution shows a series of linear and cyclic oligomers with substituents on both the silicon, e.g., [$(-N)_3$ Si-)] or nitrogen, e.g., [( - $Si)_3N$]. The terminal $Si-NH_2$ unit is not observed in the GC-MS fragmentation patterns.

Referring to Table 5, the types of repeating units of I through V are set forth below.

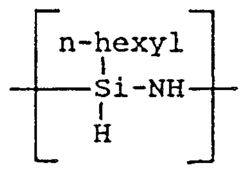

I

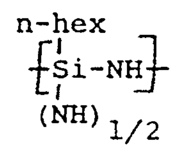

II

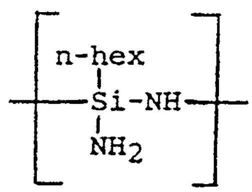

III

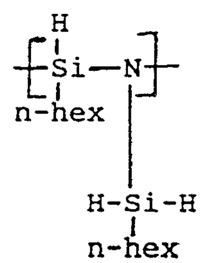

IV

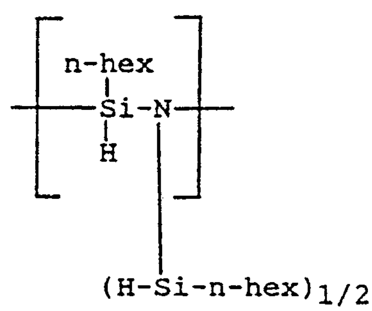

V

TABLE 5

| Type/hours | Elemental Analysis %C | %H | %N |
|---|---|---|---|
| I | 55.81 | 11.63 | 10.85 |
| II | 52.94 | 10.66 | 15.44 |
| III | 50.00 | 11.11 | 19.44 |
| IV | 59.25 | 11.93 | 5.76 |
| V | 58.37 | 11.35 | 7.57 |
| 28 h | 54.51 | 10.95 | 10.84 |
| 36 h | 52.54 | 10.73 | 12.93 |

The following conclusions are drawn from Table 5. The actual analyses at 28 hours conform closely to the linear type I polymer.

Example 7 Reaction of Phenyl Silane ($C_6H_5SiH_3$) with Ammonia

Phenylsilane (10.0 g) and $Ru_3(CO)_{12}$ (16 mg) are heated at 60°C under 150 psi of ammonia in a stainless steel reactor. The reactor is cooled several times during the reaction to sample and to recharge with ammonia. After 3 hours, 84% of the phenylsilane is converted to oligomers (calculated from NMR data). After 14 hours, the reaction temperature is increased to 90°C and after 18 hours 8 mg $Ru_3(CO)_{12}$ are added to the mixture. Table 6 sums the observations and the results from the NMR and VPO analyses.

TABLE 6

| Time (hours) | Form of Products | Conversion (%) | Unit's Ratio Si-H | N-H | Mn |
|---|---|---|---|---|---|
| 3[c] | slightly viscous | 84 | 1.21 | 0.98 | 549 |
| 9[c] | slightly viscous | 95 | 1.13 | 1.32 | -- |
| 14[c] | very viscous | 98 | 1.07 | 1.21 | 695 |
| 18[d] | hard wax | 100 | 0.98 | 1.03 | 1058 |
| 28[d,e] | solid | 100 | 0.47 | 1.47 | -- |
| 32[d,e] | solid | 100 | 0.34 | 1.70 | 1432 |

(a)-(d) As in Table 4.

(e) Addition of 8 mg $Ru_3(CO)_{12}$ and 2 ml of toluene (removed before molecular weight measurements).

The data for the 18 hour sample indicate the formation of linear Type VI polymers (see Table 7). As additional catalyst is added and the temperature raised, more ammonia is incorporated in the polymer. After 32 h, the elemental and the NMR analyses indicate that the polymer contains units of types VI, VII, and VIII in the following approximate ratios:

$$[PhSiHNH]_{0.36}[Ph\overset{(NH)_{1/2})}{\overset{|}{Si}}NH]_{0.59}[Ph\overset{NH_2}{\overset{|}{Si}}NH]_{0.05}$$

VI VII VIII

The polymer containing units VI, VII and VIII is indicated as IX below.

This solid polymer IX after 32 hours is soluble in $CCl_4$, $CH_2Cl_2$, $CHCl_3$ and toluene. It has a glass transition point at 70-72°C and softens considerable at 90°C. Pyrolysis at 900°C gives a 70% ceramic yield and finally 35% yield when heated to 1550°. Only alpha and beta $Si_3N_4$ are observed by X-ray powder diffractometry although the final ceramic product contains 29% carbon (found by elemental analysis).

TABLE 7

| Type/hours | Elemental Analysis | | |
|---|---|---|---|
| | %C | %H | %N |
| VI | 59.50 | 5.78 | 11.57 |
| VII | 56.25 | 5.47 | 16.40 |
| VIII | 52.94 | 5.88 | 20.58 |
| 18 h | 59.37 | 5.67 | 11.81 |
| 32 h | 57.42 | 5.58 | 14.21 |
| IX | 57.25 | 5.60 | 14.97 |

GC-MS analysis of the mixture after 3 hours of heating reveals that majority of the oligomers (n = 1-3) are type VI; minor products include cyclic compounds, cyclomers with branching on a silane unit and, straight and cyclic compounds branched on the nitrogen. Amine capped polymers are not observed.

Example 8 Reaction of a Hydridosilazane

$[H_2SiNMe]_x$ (2.0 g; Mn = 560) and $Ru_3(CO)_{12}$ (16 mg) are heated under several reaction conditions. The results are shown in Table 8. The starting reactant $-[H_2SiNMe]_x-$ is prepared from $H_2SiCl_2$ and $MeNH_2$ in ether solution as reported by Seyferth and Wiseman (Polymer Chem. Div. Preprints; Paper presented at the spring meeting of ACS, April 1984). The products are $[H_2SiNMe]_4$ and a linear oligomer HNMe-$[SiH_2NMe]_x$- H (x is approximately 10).

TABLE 8

| Run | Gas Phase (atm) | Temp. (°C) | Time (hours) | Form of Product | Ceramic Yield (%)[a] (Crystallized form) |
|---|---|---|---|---|---|
| 1 | $H_2$ (1 atm) | 60 | 4 | viscous liquid (Mn-1180; soluble in toluene and $CH_2Cl_2$) | 68 |
| 2 | $H_2$ (1 atm) | 135 | 2 | soft rubber | 75 |
| 3 | $MeNH_2$ (3atm) | 60 | 4 | viscous liquid (Mn = 1200) | 78 ( $\alpha$ $Si_3N_4$)[b] |
| 4[c] | $NH_3$ (8 atm) | 60 | 2 | hard rubber | 85 % ($Si_3N_4$; ( $\alpha > \beta$ ) |

a) Pyrolyzed under $N_2$ by ramping the temperature to 900°C in 6 h and then holding for 2 h at 900°C; sintered at 1550-1600°C.
b) Poorly crystallized.
c) Only 8 mg of $Ru_3(CO)_{12}$ were used

Example 9 Polymerization of Ethylsilane with Ammonia

Ethylsilane, ($EtSiH_3$, 8 g) is condensed into a stainless steel reactor, containing $Ru_3(CO)_{12}$ (16 mg) in 1 ml of toluene, cooled in a dry ice/acetone container. The reactor is then pressurized with 100 psi of ammonia (at -78°C). A total pressure of 250 psi is obtained when the reactor is heated to room temperature. The solution is heated at 60°. The reactor is cooled after 1 hour to room temperature, depressurized (releasing $H_2$), loaded with an additional 150 psi of ammonia and reheated at 60° for an hour then cycled again for 2 hours. The resulting solution (after 4 h) is very viscous. The solvent is evacuated (R.T., 0.1 mm) and the waxy polymer is heated again at 90° for another 2 hours to form a soft rubber. Pyrolysis of the rubber at between 200 and 900°C gives 58% of ceramic material. The NMR and IR spectra of the polymer produced after 4 hours show the following peaks: NMR (8, $CDCl_3$):Si-H (4.90-4.40, m); $CH_3$ (0.95, t); N-H (1.00-0.8 br); $CH_2$ (0.58, q). (The ratio of the Si-H to the Et-Si and N-H absorbance is 1:24 which suggests that the polymer consists of approximately 30% [EtSiHNH] units and the rest are [Et($NH_2$)SiNH] and [Et-$(NH)_{0.5}$SiNH]).

I.R. ($cm^{-1}$, $CH_2Cl_2$), Si-NH-Si (3385, 1170, 950); Si-$NH_2$ (1545); Si-H (2108); Si-Et [1235, 1012).

Example 10 Polysiloxazane

1,1,3,3 tetramethyldisiloxane (5.36 g, 40 mmol $(HMe_2Si)_2O$) and $Ru_3(CO)_{12}$ (32 mg, 50 µmmol) are heated at 60°C under $NH_3$ (150 psi). The pressure produced in the reactor is released and the reactor is recharged with $NH_3$ several times. 80% of the disiloxane is converted after 1.5 hours. The reaction is heated continuously for 20 hours.

GC-MS analysis indicates the following pattern:

A = $-[Me_2SiOMe_2SiNH]_n-$ (n = 2-5)

B = $H-[Me_2SiOMe_2SiNH]_n\ SiMe_2OSiMe_2H$ (n = 1-6)

A 70% yield is obtained after high vacuum distillation (180°C/0.5 mm). $A_2$ is isolated as solid (white crystals, mp. 37°, a single NMR absorbtion at 0.12 ppm. The residue is a viscous oil with Mn = 5690 daltons.

| Elemental analysis: | | | | | |
|---|---|---|---|---|---|
| | %C | %H | %N | S | O |
| Polymer B | 32.65 | 8.84 | 9.52 | 38.10 | 10.88 |
| Found | 32.67 | 9.10 | 8.56 | 41.89 | 7.02 |

This is an example of preparing a polysiloxazane

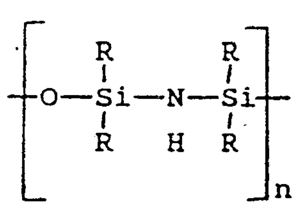

and these polysiloxazanes are believed to be novel compositions of matter. R may be hydrogen or an organic group (defined as above following Table 3). The nitrogen may be substituted, e.g. by an organic group R. The subscript n may have various values.

Example 11 Reaction Between Hexamethylcyclotrisilazane and Diethylsilane

15 mg (25 µmol) of $Ru_3(CO)_{12}$ are added to 2.19 g (10 mmol) of hexamethylcyclotrisilane ($-[Me_2SiNH]_3-$) and 0.88 g (10 mmol) of diethylsilane ($Et_2SiH_2$) and the solution is heated at 135°C for 20 h.

N-diethylsilane-hexamethylcyclotrisilazane

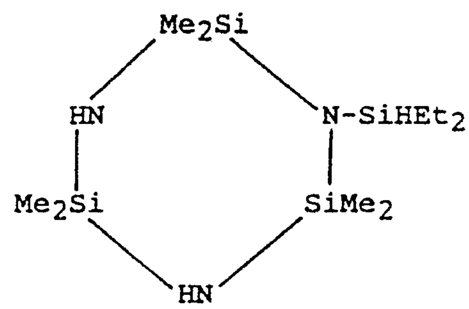

is the major product (3.7 mmol) identified by GC-MS and NMR. Other minor products are $(HEt_2Si)_2NH$ and N-dimethylsilane-hexamethylcyclotrisilazane. A residue of 28% yield remains after evaporation at 180°C (0.5 mm). The N-diethylsilyl-cyclotrisilazane is isolated by distillation and identified by GC-MS; and NMR.

<u>Example 12 Reaction of 1,2,3,4,5,6 Hexamethylcyclotrisilazane with Ammonia</u>

To 4.39 gr of

$$[-MeSiH-NMe-]_3$$

are added 16 mg of $Ru_3(CO)_{12}$ and the solution is heated under 150 psi of ammonia at 60°C. The reactant disappears after 5 hours. The reactor is again charged with ammonia and heated again at 90° for 33 hours. The product is a viscous oil having Mn = 691 which gives 57% yield of ceramic material. GC-MS analysis of the oligomeric fraction indicates the substitution of Si-H groups by Si-NH groups together the substitution of N-Me groups by N-H in the cyclomeric structure.

<u>Example 13 Polymerization of Tetramethyldisilazane in the Presence of Ammonia</u>

(a) To 100.0 mmol of TMDS (13.3 g) are added 50.0 µmol of $Ru_3(CO)_{12}$ (32.0 mg) and the solution is heated under ammonia under various reaction conditions as noted in Table 9. The volatile oligomers were separated from the solution by vacuum distillation (up to 180°/300 µ). The residue is the nonvolatile fraction.

Our initial evaluation of this reaction, using either the homogeneous ruthenium catalyst or activated Pt/C gives cyclomers (n = 3-7), linear oligomers, n = 2-11), and very small amounts of branched oligomers, (n = 1-7 <5%) as evidenced by the GC-MS analyses.

TABLE 9

THE EFFECTS OF TEMPERATURE AND AMMONIA PRESSURE ON PRODUCT SELECTIVITY IN THE REACTION TMDS WITH $NH_3$ IN THE PRESENCE OF $Ru_3(CO)_{12}$

| Run | NH | Temp. ( C) | Time[a] (Hours) | Turnover[b] Frequency | | Yield of Cyclomers in the volatile fraction (%) | | Nonvolatile Oligomer Yield (%) | Ave. M.W. (Mn) |
|---|---|---|---|---|---|---|---|---|---|
| | | | | TMDS Conversion | Si-H Disappearance | Total | Tricyclomer | | |
| 1 | 1 | 60 | 66 | 640 | 1000 | 39 | 25 | 19 | 1297 |
| 2 | 1 | 90 | 60 | 720 | 1160 | 34 | 18 | 21 | 1006 |
| 3 | 13 | 60 | 12 | 1220 | 1300 | 88 | 69 | 19 | 2024 |
| 4 | 13 | 90 | 8 | 1960 | 3438 | 91 | 70 | 5 | 1425 |

[a]At these reaction times, the catalyst is still active but the rate of reaction is considerably reduced because of the low Si-H bond concentration.

[b]TF (mol substate/mol cat/h) based on initial rates, determined by GC (TMDS conversion) and NMR integration (Si-H signal disappearance) referenced to the $CH_3$-Si signals.

## GENERAL DISCUSSION

It will be apparent that two general types of reaction occur. Both reactions can occur separately or together. In type (a) (clevage of an Si-N bond, illustrated in the examples of the parent EP-A-0 221 089 from which the present application is divided out, a ring is opened at an Si-N group to separate the silicon and nitrogen (or an open chain is cleaved at an Si-N group) and the resulting fragment or fragments react with one another and/or with a reactant such as ammonia, an amine, hydrogen, etc. The immediate reaction products will undergo further reaction, which may comprise the second type of reaction (see below).

In type (b) reaction (reaction of Si-H with a nitrogen compound HNRR) which is the subject-matter of the present division a compound Si-NRR results as the immediate product and will undergo, further reaction with SiH or with the products of reaction or with an added reactant. The R's, which may be the same or different and which may be parts of a cyclic structure, are as defined above.

In the type (b) reaction the Si-H reactant may be silane itself, $SiH_4$. Also in the type (b) reaction where the silazane

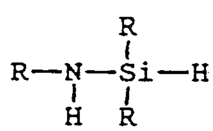

is reacted with $H_2NR$ the disilazane

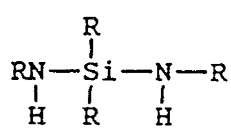

which is a new compound, results (R defined as above). Where TMDS is reacted with ammonia the resulting product is

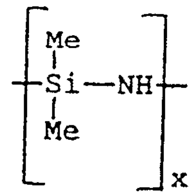

where x is greater than unity. The product is a mixture.

It will be apparent that cleavage of an Si-N group or reaction of Si-H with H-N usually leads to successive reactions which may be cleavage [type (a)] or Si-H + H-N [type (b)] reactions or a mix of both types of reactions. It should also be noted that Si-Si bonds are cleaved under many of the reaction conditions described above resulting in Si-H groups which undergo reaction with H-N groups.

It will therefore be apparent that new and useful methods of preparing oligomers and polymers having Si-N groups have been provided as have new and useful compositions of matter.

## Claims

1. A method of producing a silazane containing at least two Si-N groups which comprises providing one or more reactants which provide an Si-H group and an -NH group and causing reaction to occur between Si-H and -NH groups in the presence of a catalyst capable of activating Si-H and Si-N groups, such reaction resulting in formation of an Si-N group.

2. The method of Claim 1 wherein the reaction is conducted under conditions to cause the initial product or products to undergo further reaction to provide other products.

3. The method of Claim 2 wherein the further reaction is the result, in part at least, of the lapse of time.

4. The method of Claim 2 wherein the reaction products are controlled, at least in part, by the choice and/or amount of catalyst.

5. The method of Claim 2 wherein the reaction products are controlled, at least in part, by choice of temperature.

6. The method of Claim 2 wherein the reaction products are controlled, at least in part, by the choice of solvent.

7. The method of Claim 1 wherein the initial reaction product or products are the result of reaction of type (b) and further reaction of type (b) or type (a) is caused to ensue.

8. The method of Claim 1 wherein the reaction is caused to proceed to the point of producing oligomeric or polymeric polysilazanes which are viscous liquids or solids at room temperature.

9. The method of Claim 1 wherein the Si-H group and the N-H group are present in different compounds.

10. The method of Claim 1 wherein the Si-H and N-H groups are present in the same compound.

11. A method of preparing polysilazanes having the repeating structure I

-Si-N- I

which comprises:

(a) providing a starting material having the structure II in its molecule

-Si-A II

in which A is hydrogen, or Si-, structure II being part of a linear structure or part of a cyclic structure

(b) providing a catalyst which is effective to activate Si-H, and/or Si-Si bonds, and

(c) reacting the starting material in the presence of such catalyst with H-X-H, X being selected from the group

>NH, —NR, —NH—NH—, 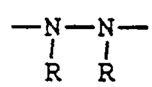 and 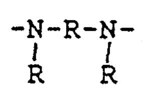,

R being hydrogen or an organic group or a silyl group

(d) thereby forming a polymer having the repeating unit

-Si-N -

12. The method of Claim 11 wherein R is hydrogen or a hydrocarbon group.

13. The method of Claim 11 wherein the catalyst is a homogeneous catalyst, a metal complex or a metal carbonyl cluster.

14. The method of Claim 11 wherein the catalyst is a heterogeneous catalyst transition metal.

15. The method of Claim 11 wherein the reaction is carried out in an organic solvent at a temperature of about 78° to 250°C.

16. The method of Claim 11 wherein the starting material is a linear or cyclic silazane having both Si-H and N-H in its structure and is capable of reacting with itself.

17. The method of Claim 11 wherein the starting material is a linear or cyclic silazane and it is reacted with H-X-H, wherein H-X-H is ammonia, a primary amine, hydrazine or a substituted hydrazine.

18. The method of Claim 11 wherein the starting material is a cyclic compound containing an Si-Si bond in the ring and it is reacted with H-X-H.

European Patent Office

# EUROPEAN SEARCH REPORT

Application Number

**EP 90 12 2025**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 639 286 (DYNAMIT NOBEL AG)<br>* Claims; pages 3-6; examples *<br>– – – | 1-18 | C 07 F 7/10<br>C 07 F 7/21<br>C 08 G 77/54<br>C 08 G 77/62 |
| X | FR-A-1 350 220 (MINNESOTA MINING & MANUFACTURING CO.)<br>* Pages 2,3; claims *<br>– – – | 1-18 | |
| X | DE-A-1 937 932 (UNION CARBIDE CORP.)<br>* Pages 2-4,8; claims *<br>– – – | 1-18 | |
| D,X | J. ORG. CHEM. 1983, vol. 48, no. 15, 1983, pages 2539-2543, Washington, DC, US; M.T. ZOECKLER et al.: "Homogeneous catalystic formation of carbon-nitrogen bonds. 2. Catalytic activation of the silicon-nitrogen bond"<br>* Pages 2541-2543 *<br>– – – | 1-18 | |
| X | ORGANIC PREPARATIONS AND PROCEDURES INT., vol. 5, no. 3, 1973, pages 135-139; H. KONO et al.: "A convenient route to aminosilanes using hydrosilane-rhodium (I), complex combinations"<br>* Pages 135-138 *<br>– – – – – | 1-18 | **TECHNICAL FIELDS SEARCHED (Int. Cl.5)**<br>C 07 F 7/00<br>C 08 G 77/00 |

The present search report has been drawn up for all claims

| Place of search | Date of completion of search | Examiner |
|---|---|---|
| The Hague | 11 January 91 | RINKEL L.J. |

CATEGORY OF CITED DOCUMENTS

X: particularly relevant if taken alone
Y: particularly relevant if combined with another document of the same catagory
A: technological background
O: non-written disclosure
P: intermediate document
T: theory or principle underlying the invention

E: earlier patent document, but published on, or after the filing date
D: document cited in the application
L: document cited for other reasons

&: member of the same patent family, corresponding document